# EUROPEAN PATENT SPECIFICATION

(11) **EP 1 717 866 B1**
(45) Date of publication and mention of the grant of the patent: **22.03.2017**
(21) Application number: 06007274.1
(22) Date of filing: 06.04.2006
(51) Int. Cl.: H01L 31/02, H01L 31/048

(54) **Solar module for generating electrical energy**
Solarmodul zur Erzeugung elektrischer Energie
Module solaire pour la génération d'énergie électrique

(30) Priority: 29.04.2005 DE 102005020129
(43) Date of publication of application: 02.11.2006
(73) Proprietor: TE Connectivity Germany GmbH, 64625 Bensheim (DE)
(72) Inventor: Feldmeier, Günter, 64653 Lorsch (DE); Wöber, Andreas, 76709 Kronau (DE); Scherer, Heinz, 64625 Bensheim (DE)
(74) Representative: Klunker . Schmitt-Nilson . Hirsch

(56) References cited:
- DE-A1- 4 301 128
- DE-A1- 10 105 718
- JP-A- H10 256 586
- JP-A- 2001 144 315
- JP-A- 2001 148 493
- JP-A- 2003 158 285
- US-A- 4 283 106
- US-A- 6 075 201

## Description

The present invention relates to a solar module for generating electrical energy, having a layer arrangement comprising a planar first layer, a planar second layer, which is arranged at a distance from the first layer, and at least one solar cell for generating electrical energy from radiation directed thereon, which cell is arranged between the first and second layers, and having an electrical connecting system for electrical interconnection of the solar cell.

A solar module for generating electrical energy typically comprises a layer arrangement comprising a planar front layer, for example a glass cover with low absorptivity, and a second planar layer, for example a rear glass cover. The individual solar cells, which contribute through a photovoltaic effect to the generation of electrical energy, are arranged between these layers and are interconnected with one another within the layer arrangement for example by copper conductors. In addition, the solar panel formed in this way is provided with a frame of aluminum, stainless steel or plastic material. In order to achieve higher voltages and currents, a plurality of solar cells are combined into solar modules by series and parallel connection of solar cells. Solar modules of this type are generally assembled into solar module arrangements through mechanical and electrical connection, wherein the electrical connecting systems of the various solar modules for electrical interconnection of 20their respective solar cells are connected together by appropriate electrical connectors.

A solar module of the above-mentioned type is known from EP 0 798 787 A2, for example. This publication describes a sheet-form photovoltaic solar module, in particular for use as a facade or roof element. Within the solar module, connecting leads for electrical connection with adjacent further solar modules pass into the area of the periphery, wherein 25the connecting leads are attached to a connecting lug, which projects into the sheet intermediate space and is embedded in the casting resin or the composite foil, and are led out of the sheet structure. The connecting lug is connected with an insulating sleeve extending outside the sheet structure, wherein the connecting elements thereof are connected in each case with a connecting lead laid through the insulating sleeve and may be interconnected with corresponding connecting elements of adjacent solar modules. The insulating sleeve rests on the edge of the sheet structure, wherein the connecting lug is connected rigidly with the hollow-cylindrical insulating sleeve, which preferably extends over the entire length of the module. An advantage of such a solar module is that it enables even construction personnel to install solar technology systems by simple assembly of modules using the connecting elements at the sleeve end. However, a disadvantage consists in the fact that an insulating sleeve integrated partly into the sheet structure and connected rigidly with the connecting lug enables the achievement of only limited flexibility in the arrangement and interconnection of a plurality of solar modules.

US 4 283 106 A discloses a symmetrical plug and socket connector which may be installed in a solar panel array. A solar panel is enclosed in a frame formed of sheet metal formed with an upstanding side edge portion defining a plurality of notches or slots, each aligned with a respective buss bar. A solar cell connector having a receptacle member and a plug member is mounted in each respective slot with the receptacle member oriented with the bore opening in the desired direction. For fixing a connector, the sheet metal of the frame is inserted into a peripheral slot of the receptacle member. When the receptacle member is fully in place, the buss bar is laid against the plate portion of the terminal and soldered thereto to establish mechanical and electrical connection therebetween. This also serves to fix the receptacle member 12 in the frame 84.

The object of the present invention is to provide a solar module of the above-mentioned type whose connecting system allows considerable flexibility with regard to the arrangement and interconnection of a plurality of solar modules to form a solar module arrangement, for example on a flat surface.

This object is achieved by a solar module of the above-mentioned type according to the features of claim 1.

According to a first aspect of the present invention, it is provided, in the case of a solar module of the above-mentioned type, that the electrical connecting system comprises at least one connector element for external electrical connection of the solar module, wherein the connector element is connected with the layer arrangement in a peripheral area thereof via at least one contact element projecting into the layer arrangement. The connector element comprises at least one mechanical connecting means, by means of which the connector element may be connected with a separately formed, further connector element, which is in
turn connected with the layer arrangement in the peripheral area via at least one contact element projecting into the layer arrangement.

According to a further aspect of the present invention, the solar module of the above-mentioned type comprises an electrical connecting system which comprises at least one connector element formed three-dimensionally outside the layer arrangement for external electrical connection of the solar module, said connector element being connected with the layer arrangement in a peripheral area thereof via at least one contact element projecting into the layer arrangement. At least a first part of the connector element extends along one edge of the layer arrangement and a second part of the connector element extends approximately orthogonally to the edge.

With a solar module which is constructed in accordance with one or both of the stated aspects of the present invention, the following advantages may be achieved with regard to flexibility when arranging and interconnecting a plurality of such solar modules: a connector element for a solar module according to the invention may be prefabricated in a defined or in a plurality of defined embodiments and, depending on requirements, connected with the layer arrangement on production of the solar module. In this way, flexible positioning on a side face of the module or of the layer arrangement is made possible, such that a plurality of solar modules may be tightly packed together to form a solar module arrangement by positioning a connector element at a corresponding suitable point. Furthermore such a connector system provides the possibility of modular extension to a plurality of connector elements, to the effect that, depending on requirements and the size of the solar panel, appropriately shaped or an appropriate number of connector elements may be used. This makes it possible, in addition, to achieve different types of interconnection of a plurality of solar modules, for example series- and/or parallel connection of a plurality of solar cells or a plurality of solar 25modules, with a uniform connector system. Furthermore, connector elements of the solar module according to the invention are suitable for providing so-called bypass diodes in varying numbers, even for large solar panels, in one or more connector elements which are connected with a panel. Bypass diodes are needed so that the solar module can continue to operate at correspondingly reduced power in the case of partial shade or a partial defect. The bypass diode is connected in parallel with individual solar cells or a given solar cell arrangement and conducts the current generated past inoperative solar cells.

These stated advantages with regard to flexibility in the interconnection and arrangement of a plurality of solar modules are achieved by a given mechanical configuration of the connector element as part of the electrical connecting system of the solar module according to the invention. According to the first aspect of the invention, the configuration of the connector element such that the latter contains a mechanical connecting means allows the connector system to be extended in modular manner by the provision of one or more further connector elements, which connect to the connector element. According to the further aspect of the present invention, the three-dimensional configuration of the connector element outside the layer arrangement allows it to be arranged for example in the corner area of the solar panel or to a certain extent on a major face of the solar panel. Overall, the invention makes possible a large number of ways of arranging a connector element on the solar panel, such that the widest possible range of installation conditions and packing densities may be taken into account in a solar module arrangement. It is also possible to combine together the two stated aspects of the configuration of a connector element, should this be necessary for a given arrangement.

The mechanical connecting means comprises a latching device, which may be connected with a corresponding latching device of the further connector element. This makes it possible for the further connector element to be latched into the connector element which is already provided, such that the two connected connector elements may be connected with the layer arrangement. In this way, the connector system may be extended in modular manner in the
production process, such that different solar panel sizes and installation conditions may be taken into account.

In a further development of the invention, an electrical connection zone of the connector element is so constructed that an electrical lead for external electrical connection of the solar module is provided in this connection zone or may be connected thereto. For example, an electrical cable is injection-molded on the connector element or may be attached to the connector element by a plug-in connector. According to one embodiment, the electrical connection zone of the connector element is arranged at an end remote from the mechanical connecting means. In this way, an arrangement may be achieved of a plurality of latched-together connector elements either with outgoing cables injection-molded on or with cables contacted by plug-in connectors at the end of the arrangement.

In a further development of the second aspect of the present invention, the first part of the connector element contacts the layer arrangement via a side face thereof, wherein the second part of the connector element projects into a major face of the layer arrangement. The second part of the connector element is so constructed that an electrical lead for external electrical connection of the solar module is provided on the second part or may be connected thereto. For example, the second part of the connector element is so constructed that contacting of said part is effected by the electrical lead from or contrary to the direction of an opposing edge of the layer arrangement. This makes it possible to construct the routing for the external electrical lead along a major face of the solar panel, for example on the back thereof, so making it possible for a plurality of solar modules to abut one another with their side faces, since the routing may be provided on the back of the solar modules.

A similar effect may be achieved if the second part of the connector element is so constructed that contacting of the second part by the electrical lead is effected from a direction along the edge of the layer arrangement to which the first part is attached. In this way, the routing may be constructed for example on the back of the solar module, but along an edge thereof.

According to a further embodiment of the invention, the first part and the second part of the connector element are connected together approximately at right angles. The connector element is arranged in a corner area of the layer arrangement, wherein the first and second parts of the connector element are connected to the layer arrangement at different edges thereof. This makes it possible for the connector element to be arranged in space-saving manner in a corner area of the solar module. According to a further development of the invention, one of the parts of the connector element is so constructed that an electrical lead for external electrical connection of the solar module is provided on this part or may be connected thereto. It is not essential in this respect for all the outgoing cables or plug-in connector terminals to be provided along one edge of the arrangement or at an orthogonal angle thereto. In this context, other routing angles are also feasible.

In a further development of a solar module according to the invention, the connector element is so constructed that it forms part of a frame of the solar module. To this end, the connector element comprises, for instance, a housing of aluminum, stainless steel or plastic material, which at the same time constitutes the frame or fits into a frame provided on the remaining part of the solar module.

Further advantageous configurations and developments of the invention are stated in subordinate claims.

The invention is explained in more detail below with reference to the Figures of the drawings, which illustrate various embodiments of a solar module according to the invention.
Figure 1 is a representation of a solar module according to the invention in front and side sectional views and comprising a first embodiment of a connector element,
Figure 2 shows a portion of a solar module according to the invention comprising a further embodiment of a connector element,
Figure 3 shows a portion of a solar module according to the invention comprising a further embodiment of a connector element,
Figures 4-6 show respective representations of various variants of the construction and interconnection of a plurality of solar modules,
Figure 7 is a representation of a further variant of the construction and interconnection of a plurality of solar modules,
Figure 8 shows a portion of a variant additional to Figure 7 of the construction and interconnection of a plurality of solar modules.

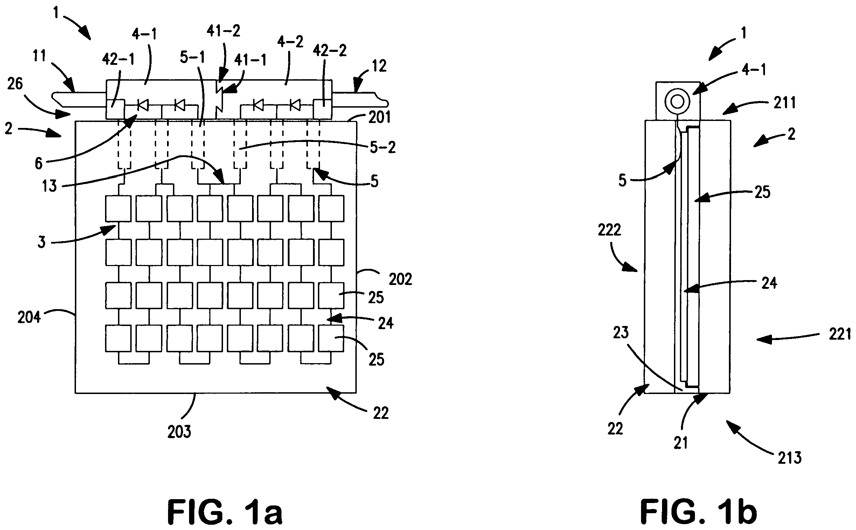

Figure 1 shows a solar module according to the invention in front (Figure 1a) and side (Figure 1b) sectional view and comprising a first embodiment of a connector element, a so-called edge-connector. As is clear in particular from Figure 1b, the solar module 1a comprises a layer arrangement 2, which for its part comprises a plurality of layers. In the present exemplary embodiment, a planar first layer 21 in the form of a glass sheet constitutes a front glass cover with low absorptivity, which serves to protect the solar cells within the layer arrangement. A second planar layer 22 likewise takes the form of a glass sheet and constitutes an inner, back sheet of the solar module 1, wherein the layer 22 is arranged at a distance from the first layer 21, forming an interspace. On the inner side of the first layer 21 there are arranged one or more solar cells 25, which are in turn contacted on the inside by a foil 24, for example in the form of a copper foil. The solar cells 25 are embedded together with the foil 24 in potting compound 23, which substantially fills the rest of the interspace between the outer layer 21 and the inner layer 22. Instead of glass sheets, a flexible, for example film-type transparent material may be used for the layer arrangement, in order for example to be able to be conformed to three-dimensional surfaces, on which the solar modules are to be arranged.

As is clear in particular from Figure 1a, the individual solar cells 25 are interconnected in series via an electrical connecting system 3, wherein the series connection of the solar cells 25 is contacted at individual points by contact elements 5. Furthermore, the electrical connecting system 3 comprises two connector elements 4-1 and 4-2, also known as edge connectors, which serve in external electrical connection of the solar module 1, in particular in establishing an electrical connection between the solar module 1 and at least one external electrical device such as a power consumer or in interconnection with a solar module. The connector elements 4-1 and 4-2 are connected with the layer arrangement 2 in a peripheral area 26 thereof in each case via a plurality of contact elements 5 projecting into the layer arrangement 2. The connector elements 4-1 and 4-2 are attached to an upper edge 201 of the solar module 1. The side edges of the solar module 1 are designated 202 and 204 as the right and left edges respectively. The solar module 1 is defined at the bottom by the lower edge 203. As is clear from Figure 1b, the connector element 4-1 (as well as the connector element 4-2 not visible in Figure 1b) is arranged on the upper side face 211 of the layer arrangement 2, wherein the contact elements 5 project into the inside of the layer arrangement 2. In this respect, after production the layer arrangement 2 and the contact element 5 are so arranged relative to one another that the foil 24 is contacted by the contact element 5. The front surface of the transparent layer 21 (in Figure 1b the right-hand surface) forms a first major face 221 of the solar module, while the rear surface (in Figure 1b the lefthand outer surface) of the inner layer 22 forms a second major surface 222 of the solar module 1. The major faces are the mutually facing larger surfaces of the sheet-form solar panel, wherein one of the surfaces with low absorptivity is oriented towards irradiated light and receives it and the other one is arranged opposite the former. Both of these layers serve in particular to protect the solar cells positioned on the inside.

As is further illustrated in Figure 1a, the connector element 4-1 and the connector element 4-2 each contain a plurality of diodes 6, which, as respective bypass diodes, conduct a current past the associated group of solar cells 25 of the solar module if one or more solar cells of a respective group is/are not contributing or is/are contributing only to a limited degree to the generation of electrical energy. In this way, the module may continue to operate in partial shade and at correspondingly reduced power. According to the embodiment of Figure 1, a plurality of contact elements 5 is provided, which project into the layer arrangement 2 and which are led out of the layer arrangement 2 for the purpose of contacting the connector elements 4-1 and 4-2. In each case one diode 6 provided in the connector element 4-1 and 4-2 is connected between the led-out contact elements 5.

According to the embodiment of Figure 1, the connector element 4-1 comprises a mechanical connecting means in the form of a latching device 41-1, which is connected with a corresponding connecting means in the form of a latching device 41-2 of the further connector element 4-2. The latching device 41-1 is so designed in relation to the corresponding latching device 41-2 of the further connector element that the end of the further connector element 4-2 is moved towards the connector element 4-1 and connected with the connector element 4-1 in a final latching position. The connector elements 4-1, 4-2 latched together in this way are then connected with the layer arrangement 2 in the production process of the solar module 1. Other mechanical connecting means are also feasible, such as for example screw fittings or the like, a latching device being particularly simple and quick to handle, without the need for additional accessories.

The connector elements 4-1 and 4-2 comprise respective electrical connection zones 42-1 and 42-2, which are so constructed that an electrical lead 11 or 12 respectively for connection with at least one external electrical device, which may for example also be a further separate solar module, is provided in this connection zone or may be connected thereto. For example, the leads 11 and 12 are injection-molded onto the respective connection zones 42-1 and 42-2 respectively, or may be connected in these zones via respective plug-in connectors. As is visible in the illustration of Figure 1a, the electrical connection zones 42-1 and 42-2 of the connector elements 4-1 and 4-2 are arranged at an end remote from the respective latching device 41-1 or 41-2.

Since no diode is provided at the location of the mechanical latching devices 41-1, 41-2 or at the point of transition from one connector element to the other connector element, an electrical lead 13 is provided inside the connecting system 3 at an outer contact element 5-1, which is in contact with the connector element 4-1, in order to connect the outer contact element 5-1 with the corresponding outer contact element 5-2 of the further connector element 4-2. In this way, the two contact elements 5-1 and 5-2 are connected directly together, such that an electrical connection is established between the connector elements 4-1 and 4-2.

An arrangement of a solar module illustrated in Figure 1 makes it possible to connect a solar panel in the form of the layer arrangement 2 simply and flexibly via a connector system for example with a further solar module. In the process, depending on the size and type of the solar panel a varying number of connector elements may be provided which are connected together and which also contain in particular an appropriate number of bypass diodes. This makes it possible to use this technology also for large solar panels, a suitable number of connector elements then being used. Such a connector system has a high level of flexibility, since a plurality of solar modules may be taken into account with module dimensions and module arrangements which differ at virtually any desired point and have virtually any desired number of connector elements.

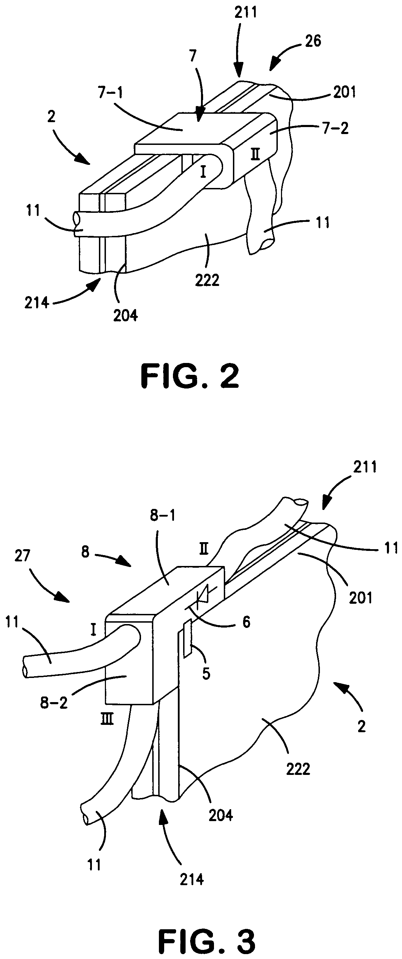

Figure 2 shows a portion of a solar module with a further embodiment of a connector element 7 in the form of a so-called edge connector. The connector element 7 is formed three-dimensionally outside the layer arrangement 2 and is contacted in the manner of the connector elements 4-1 and 4-2 according to Figure 1 with the layer arrangement 2. The connector element 7 according to Figure 2 is so configured that a first part 7-1 of the connector element extends along the edge 201 of the layer arrangement 2 and a second part 7-of the connector element extends in a direction which is approximately orthogonal to the edge 201. The first part 7-1 of the connector element 7 contacts the layer arrangement 2 via the side face 211 thereof, as is shown schematically in Figure 2. The second part 7-2 of the connector element 7 projects into a major face 222, in the present case the rear surface of the layer 22 (Figure 1b), of the layer arrangement 2. The second part 7-2 of the connector element 7 is so designed as a connecting zone that an electrical lead 11 for connection with at least one external electrical device may be provided, for example injection-molded, on the second part 7-2, or connected thereto, for example via a suitable plug connector.

The representation of Figure 2 shows a number of variants for possible connection of the second part 7-2 of the connector element 7 in a single illustration, wherein the different variants are labeled I and II. According to variant I, contacting of the second part 7-2 is effected by the electrical lead 11 from a direction along the edge 201 of the layer arrangement 2 to which the first part 7-1 is attached. According to variant II , contacting of the second part 7-2 is effected by the electrical lead 11 from the direction of the opposite edge 203 (c.f. for example Figure 1a) of the layer arrangement 2. Both variants make it possible to provide routing for the solar module at the rear surface of the module, such that for example an adjacent solar module may be brought comparatively close to the side face 211 or 214 for example from above or from the side. The connector element 7 may also additionally contain a diode as bypass diode, as already explained in more detail with reference to the exemplary embodiment of Figure 1, wherein such a diode is not illustrated in Figure 2 for reasons of clarity.

Figure 3 is a further representation of a portion of a solar module according to the invention comprising a further embodiment of a connector element 8. The connector element 8 (so-called edge connector) according to Figure 3 is likewise formed three-dimensionally outside the layer arrangement 2 and, as is explained in more detail with reference to the exemplary embodiment of Figure 1, is connected with the layer arrangement 2 in a peripheral area 26 via at least one contact element 5 projecting into the layer arrangement 2. The first part 8-1 of the connector element 8 extends along the edge 201 of the layer arrangement 2 and a second part 8-2 of the connector element 8 extends in a direction approximately orthogonal to the edge 201, namely along the edge 204. The first part 8-1 and the second part 8-2 of the connector element 8 are connected together approximately at right angles, wherein the connector element 8 is arranged in a corner area 27 of the layer arrangement 2. In this respect, the first and second parts 8-1, 8-2 of the connector element 8 are connected to the layer arrangement 2 at different edges 201, 204 thereof. As illustrated schematically by means of a diode 6, the connector element 8 contains a bypass diode, whose function has already been explained in more detail with reference to Figure 1.

As in Figure 2, the illustration of Figure 3 also shows different variants for electrical connection of the connector element 8 in a single diagram. I denotes a variant in which the part 8-2 of the connector element is contacted by the electrical lead 11 from a direction directed towards a plane parallel to one of the side faces, in the present case the side face 214, of the layer arrangement 2. The lead 11 connects the solar module with at least one external electrical device, for example a further solar module or a power consumer. Variant II shows a contacting option in which contacting of the part 8-1 is effected by the electrical lead 11 from a direction along the edge 201 of the layer arrangement 2 to which this part 8-1 is attached. Likewise, according to variant III contacting of the part 8-2 is effected by the electrical lead 11 from a direction along the edge 204 of the layer arrangement to which this part 8-2 is attached. In general, it should be mentioned in this context that all the outgoing leads or plug-in connector terminals do not have to be oriented parallel to an edge of the layer arrangement or at a right angle thereto. Instead, 45° angles or any other desired lead angles are feasible.

With a connector element 8 according to Figure 3, a connector element is advantageously provided in the form of a corner component, which may be provided in space-saving manner at respective corners of the solar module, so as to provide flexible interconnection options and arrangement options for connector elements. The connector element 8 according to Figure 3 is furthermore advantageously constructed as part of a frame of the solar module, so as to provide edge protection for the layer arrangement 2.

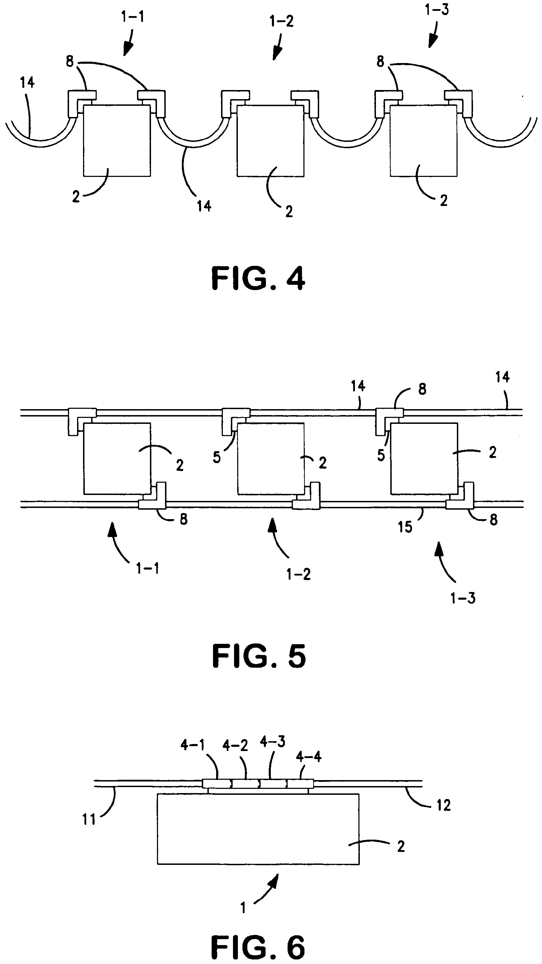

Figures 4-6 show respective representations of various variants for the construction and interconnection of a plurality of solar modules.

According to Figure 4, a plurality of solar modules 1-1, 1-2 and 1-3 are interconnected in series, wherein an embodiment according to Figure 3 is used as connector element. A respective corner connector is arranged at one of the top corners of the solar panel 2 and connected with an electrical lead 14.

Figure 5 shows an interconnection variant according to which the solar modules 1-1 to 1-3 are connected in parallel. The top corner connectors 8 in the embodiment of Figure 3 are connected together via a lead 14, whereas the bottom corner connectors 8 are connected together via a lead 15. The contact zones of the corner connectors 8, via which the corner connectors are connected with the respective panel 2, are shown shaded in the representations according to Figures 4 and 5. In these contact zones the connector elements are connected to the panel 2 via at least one respective contact element 5. As can easily be imagined from Figure 5, a further arrangement similar to that of Figure 5 may be brought from above or below to relatively close to the module arrangement according to Figure 5, since the connector elements 8 of the two module arrangements do not touch one another. Instead, in the case of suitable routing a connector element 8 can be positioned relatively close to a further solar module brought close to it, so achieving overall a relatively tightly packed solar module arrangement.

Figure 6 shows a representation of a solar module 1 in a variant arrangement which is based on the exemplary embodiment according to Figure 1. According to the variant of Figure 6, a plurality of connector elements 4-1 to 4-4 have been connected together by appropriate latching devices and contacted with the panel 2. The illustration according to Figure 6 shows an embodiment in which an appropriate number of connector elements has been provided for a larger panel 2.

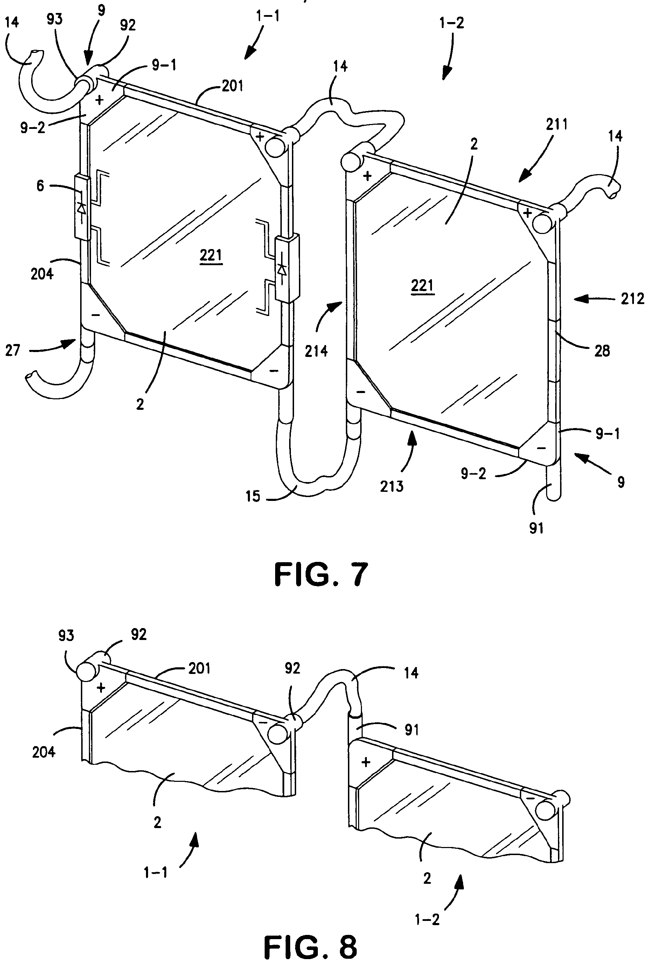

Figure 7 is a representation of a further variant of the construction and interconnection of a plurality of solar modules according to the invention. According to Figure 7, two solar modules 1-1 and 1-2 are connected together in parallel, wherein Figure 7 shows in a single illustration a plurality of variants of connection options using appropriate connectors. In this respect, corner connectors 9 are provided, which are formed three-dimensionally outside the layer arrangement 2 and are connected with the layer arrangement 2 in the manner as described above with reference to the other embodiments of a connector element. The connector elements 9 each comprise a first part 9-1 and a second part 9-2, these being connected together at the outer edges approximately at right angles, so forming a corner connector element. The upper row of the connector elements 9 is so constructed that contacting of a connector element by the electrical lead 14 is effected from a direction directed towards a plane parallel to one of the major faces 221 of the layer arrangement 2. In the present case, contacting of the connector element 9 is effected by the electrical lead 14 orthogonally to the major face 221 of the layer arrangement 2. In the lower row of connector elements 9, contacting thereof is effected by the electrical lead 15 from a direction directed towards a plane parallel to one of the side faces, in the present case the side face 213, of the layer arrangement 2. This means that the lower row of connector elements 9 is contacted from below via corner connectors 91 by the electrical lead 15, whilst the upper row of connector elements 9 is contacted from behind or from the front by the lead 14 via corner connectors 92 and 93.

The frame 28 of the respective solar module may be of plug-in or modular construction, as indicated in Figure 7 by the segmented subdivision of the frame 28. The frame 28 may carry the current. Likewise, a frame connecting piece may be provided, with a diode 6 as bypass diode. The leads 14, 15 may be connected to the respective corner connectors by plugging in, or in a further variant are injection-molded onto the respective corner connector.

Figure 8 shows a portion of a variant additional to Figure 7 of the construction and interconnection of a plurality of solar modules. The solar modules 1-1 and 1-2 are connected together in series via different corner connector variants, as already explained with reference to Figure 7.

As is clear from the illustrations of Figures 7 and 8, the respective connector elements 9 are designed as parts of the frame 28 of the respective solar module. The connector element 9, like the above-described embodiments of connector elements 4-1, 7 and 8, extends lengthwise by a distance which is small relative to the length of the layer arrangement 2 of the solar module. This makes it possible to provide only a small part of the peripheral area of the solar module with connector elements, such that neighboring solar modules may be tightly packed, as already described. It may also be advantageous to combine together the individual embodiments of connector elements, for example latching a connector element according to Figure 1 to a corner connector according to Figure 3. In this way, it is possible further to increase the flexibility of the connector system design.

## Claims

1. A solar module for generating electrical energy
- having a layer arrangement (2) comprising a planar first layer (21), a planar second layer (22), which is arranged at a distance from the first layer (21), and at least one solar cell (25) for generating electrical energy as a result of radiation directed thereon, which cell is arranged between the first and second layers (21, 22),
- having an electrical connecting system (3) for electrical interconnection of the solar cell (25),
- the electrical connecting system (3) comprises at least one connector element (4-1) for external electrical connection of the solar module (1), which element is connected with the layer arrangement (2) in a peripheral area (26) thereof via at least one contact element (5) projecting into the layer arrangement,
- **characterised in that** the connector element (4-1) comprises at least one mechanical connecting means (41-1) for connecting the connector element (4-1) with a corresponding mechanical connecting means (41-2) of a separately formed, further connector element (4-2), which is connected with the layer arrangement (2) in the peripheral area (26) via at least one contact element (5) projecting into the layer arrangement, the mechanical connecting means comprising a latching device (41-1) for connecting with a corresponding latching device (41-2) of the further connector element (4-2).

2. A solar module according to claim 1, in which the mechanical connecting means (41-1) is so arranged and constructed that the further connector element (4-2) is connected at the end with the connector element (4-1).

3. A solar module according to any one of claims 1 to 2, in which an electrical connection zone (42-1) of the connector element (4-1) is so constructed that an electrical lead (11) for external electrical connection of the solar module (1) is provided in this connection zone (42-1) or may be connected thereto.

4. A solar module according to claim 3, in which the electrical connection zone (42-1) of the connector element (4-1) is arranged at an end remote from the mechanical connecting means (41-1).

5. A solar module according to any one of claims 1 to 4, in which the connector element (4-1) contains at least one bypass diode (6).

6. A solar module according to any one of claims 1 to 5, in which
- a plurality of contact elements (5) projecting into the layer arrangement (2) are provided, which are led out of the layer arrangement (2),
- in each case one diode (6), contained in the connector element (4-1), is connected between the led-out contact elements (5).

7. A solar module according to claim 6, in which an electrical lead (13) is provided on an outer contact element (5-1), which is in contact with the connector element (4-1), in order to connect the outer contact element (5-1) with a corresponding outer contact element (5-2) of the further connector element (4-2).

8. A solar module for generating electrical energy according to any one of the preceding claims, wherein
- the electrical connecting system (3) further comprises at least one three-dimensionally formed connector element (7, 8, 9) formed outside the layer arrangement (2) for external electrical connection of the solar module (1), which formed connector element is connected with the layer arrangement (2) in a peripheral area (26) thereof via at least one contact element (5) projecting into the layer arrangement (2),
- wherein at least a first part (7-1, 8-1, 9-1) of the formed connector element extends along one edge (201) of the layer arrangement and a second part (7-2, 8-2, 9-2) of the formed connector element extends in a direction (204, 222) orthogonal to the edge (201).

9. A solar module according to claim 8, in which
- the first part (7-1) of the formed connector element (7) contacts the layer arrangement (2) via a side face (211) thereof and the second part (7-2) of the formed connector element projects into a major face (222) of the layer arrangement,
- the second part (7-2) is so constructed that an electrical lead (11) for external electrical connection of the solar module (1) is provided on the second part (7-2) or may be connected thereto.

10. A solar module according to claim 9, in which the second part (7-2) of the formed connector element (7) is so constructed that contacting of the second part (7-2) is effected by the electrical lead (11) from an opposing edge (203) of the layer arrangement (2).

11. A solar module according to claim 9, in which the second part (7-2) of the formed connector element (7) is so constructed that contacting of the second part (7-2) is effected by the electrical lead (11) from a direction along the edge (201) of the layer arrangement (2) to which the first part (7-1) is attached.

12. A solar module according to claim 8, in which the first part (8-1, 9-1) and the second part (8-2, 9-2) of the formed connector element (8, 9) are connected to one another approximately at right angles,
- the formed connector element (8, 9) is arranged in a corner area (27) of the layer arrangement (2), wherein the first and second parts (8-1, 9-1, 8-2, 9-2) of the connector element are connected to the layer arrangement at different edges (201, 204) thereof.

13. A solar module according to claim 12, in which at least one of the parts (8-1, 9-1, 8-2, 9-2) of the formed connector element (8, 9) is so constructed that an electrical lead (11, 14, 15) for external electrical connection of the solar module (1) is provided on the part (8-1, 9-1, 8-2, 9-2) or may be connected thereto.

14. A solar module according to claim 13, in which at least one of the parts (8-1, 8-2) of the formed connector element is so constructed that contacting of the part (8-1, 8-2) is effected by the electrical lead (11) from a direction along the edge (201, 204) of the layer arrangement to which the part (8-1, 8-2) is attached.

15. A solar module according to claim 13 or claim 14, in which at least one of the parts (8-2, 9-2) of the formed connector element is so constructed that contacting of the part (8-2, 9-2) is effected by the electrical lead (11, 14, 15) from a direction directed towards a plane parallel to one of the side faces (213, 214) of the layer arrangement.

16. A solar module according to any one of claims 13 to 15, in which the formed connector element (9, 92, 93) is so constructed that contacting thereof is effected by the electrical lead (14, 15) from a direction directed towards a plane parallel to one of the major faces (222) of the layer arrangement.

17. A solar module according to any one of claims 8 to 16, in which the formed connector element (7, 8, 9) contains a bypass diode (6).

18. A solar module according to any one of the preceding claims, in which at least one of the connector elements (4-1, 4-2, 7, 8, 9) is so constructed that it forms part of a frame (28) of the solar module (1).

19. A solar module according to any one of the preceding claims, in which at least one of the connector elements (4-1, 4-2, 7, 8, 9) extends lengthwise by a distance which is small relative to the length of the layer arrangement (2).

## Patentansprüche

1. Solarmodul zur Erzeugung elektrischer Energie
- mit einer Schichtenanordnung (2) umfassend eine flächenartige erste Schicht (21), eine flächenartige zweite Schicht (22), die mit einem Abstand zu der ersten Schicht (21) angeordnet ist, und wenigstens eine Solarzelle (25) zur Erzeugung von elektrischer Energie infolge eingestrahlter Strahlung, die zwischen der ersten und zweiten Schicht (21, 22) angeordnet ist,
- mit einem elektrischen Anschlusssystem (3) zur elektrischen Verschaltung der Solarzelle (25),
- wobei das elektrische Anschlusssystem (3) wenigstens ein Verbinderelement (4-1) zum externen elektrischen Anschluss des Solarmoduls (1) aufweist, das mit der Schichtenanordnung (2) in einem Randbereich (26) derselben über wenigstens ein in die Schichtenanordnung hineinragendes Kontaktelement (5) verbunden ist,
- **dadurch gekennzeichnet, dass** das Verbinderelement (4-1) wenigstens ein mechanisches Anschlussmittel (41-1) aufweist zum Verbinden des Verbinderelements (4-1) mit einem korrespondierenden mechanischen Anschlussmittel (41-2) eines separat geformten, weiteren Verbinderelements (4-2), das mit der Schichtenanordnung (2) in dem Randbereich (26) über wenigstens ein in die Schichtenanordnung hineinragendes Kontaktelement (5) verbunden ist, wobei das mechanische Anschlussmittel eine Verrastungsvorrichtung (41-1) zur Verbindung mit einer korrespondierenden Verrastungsvorrichtung (41-2) des weiteren Verbinderelements (4-2) aufweist.

2. Solarmodul nach Anspruch 1,
bei dem das mechanische Anschlussmittel (41-1) derart angeordnet und ausgebildet ist, dass das weitere Verbinderelement (4-2) stirnseitig mit dem Verbinderelement (4-1) verbunden ist.

3. Solarmodul nach einem der Ansprüche 1 bis 2,
bei dem ein elektrischer Verbindungsbereich (42-1) des Verbinderelements (4-1) derart ausgebildet ist, dass eine elektrische Leitung (11) zum externen elektrischen Anschluss des Solarmoduls (1) in diesem Verbindungsbereich (42-1) vorgesehen oder an diesen anschließbar ist.

4. Solarmodul nach Anspruch 3,
bei dem der elektrische Verbindungsbereich (42-1) des Verbinderelements (4-1) an einem von dem mechanischen Anschlussmittel (41-1) abgelegenen Ende angeordnet ist.

5. Solarmodul nach einem der Ansprüche 1 bis 4,
bei dem das Verbinderelement (4-1, 4-2) wenigstens eine Bypass-Diode (6) enthält.

6. Solarmodul nach einem der Ansprüche 1 bis 5, bei dem
- mehrere in die Schichtenanordnung (2) hineinragende Kontaktelemente (5) vorgesehen sind, die aus der Schichtenanordnung (2) herausgeführt sind,
- jeweils eine Diode (6), die in dem Verbinderelement (4-1) enthalten ist, zwischen die herausgeführten Kontaktelemente (5) geschaltet ist.

7. Solarmodul nach Anspruch 6,
bei dem an einem äußeren Kontaktelement (5-1), das mit dem Verbinderelement (4-1) in Kontakt steht, eine elektrische Leitung (13) vorgesehen ist, um das äußere Kontaktelement (5-1) mit einem korrespondierenden äußeren Kontaktelement (5-2) des weiteren Verbinderelements (4-2) zu verbinden.

8. Solarmodul zur Erzeugung elektrischer Energie nach einem der vorhergehenden Ansprüche, bei dem
- das elektrische Anschlusssystem (3) ferner wenigstens ein außerhalb der Schichtenanordnung (2) gebildetes, dreidimensional geformtes Verbinderelement (7, 8, 9) zum externen elektrischen Anschluss des Solarmoduls (1) aufweist, das mit der Schichtenanordnung (2) in einem Randbereich (26) derselben über wenigstens ein in die Schichtenanordnung (2) hineinragendes Kontaktelement (5) verbunden ist,
- wobei wenigstens ein erster Teil (7-1, 8-1, 9-1) des geformten Verbinderelements sich entlang einer Kante (201) der Schichtenanordnung erstreckt und ein zweiter Teil (7-2, 8-2, 9-2) des geformten Verbinderelements sich in einer zu der Kante (201) orthogonalen Richtung (204, 222) erstreckt.

9. Solarmodul nach Anspruch 8, bei dem
- der erste Teil (7-1) des geformten Verbinderelements (7) die Schichtenanordnung (2) über eine Seitenfläche (211) derselben kontaktiert und der zweite Teil (7-2) des geformten Verbinderelements in eine Hauptfläche (222) der Schichtenanordnung hineinragt,
- der zweite Teil (7-2) derart ausgebildet ist, dass eine elektrische Leitung (11) zum externen elektrischen Anschluss des Solarmoduls (1) an dem zweiten Teil (7-2) vorgesehen oder an diesen anschließbar ist.

10. Solarmodul nach Anspruch 9,
bei dem der zweite Teil (7-2) des geformten Verbinderelements (7) derart ausgebildet ist, dass eine Kontaktierung des zweiten Teils (7-2) durch die elektrische Leitung (11) aus der Richtung einer gegenüberliegenden Kante (203) der Schichtenanordnung (2) erfolgt.

11. Solarmodul nach Anspruch 9,
bei dem der zweite Teil (7-2) des geformten Verbinderelements (7) derart ausgebildet ist, dass eine Kontaktierung des zweiten Teils (7-2) durch die elektrische Leitung (11) aus einer Richtung entlang der Kante (201) der Schichtenanordnung (2), an welcher der erste Teil (7-1) befestigt ist, erfolgt.

12. Solarmodul nach Anspruch 8, bei dem
- der erste Teil (8-1, 9-1) und der zweite Teil (8-2, 9-2) des geformten Verbinderelements (8, 9) in einem näherungsweise rechten Winkel miteinander verbunden sind,
- das geformte Verbinderelement (8, 9) in einem Eckbereich (27) der Schichtenanordnung (2) angeordnet ist, wobei der erste und zweite Teil (8-1, 9-1, 8-2, 9-2) des Verbinderelements an unterschiedlichen Kanten (201, 204) der Schichtenanordnung mit dieser verbunden sind.

13. Solarmodul nach Anspruch 12,
bei dem wenigstens einer der Teile (8-1, 9-1, 8-2, 9-2) des geformten Verbinderelements (8, 9) derart ausgebildet ist, dass eine elektrische Leitung (11, 14, 15) zum externen elektrischen Anschluss des Solarmoduls (1) an diesem Teil (8-1, 9-1, 8-2, 9-2) vorgesehen oder an diesen anschließbar ist.

14. Solarmodul nach Anspruch 13,
bei dem wenigstens einer der Teile (8-1, 8-2) des geformten Verbinderelements derart ausgebildet ist, dass eine Kontaktierung dieses Teils (8-1, 8-2) durch die elektrische Leitung (11) aus einer Richtung entlang der Kante (201, 204) der Schichtenanordnung, an welcher dieser Teil (8-1, 8-2) befestigt ist, erfolgt.

15. Solarmodul nach Anspruch 13 oder Anspruch 14,
bei dem wenigstens einer der Teile (8-2, 9-2) des geformten Verbinderelements derart ausgebildet ist, dass eine Kontaktierung dieses Teils (8-2, 9-2) durch die elektrische Leitung (11, 14, 15) aus einer Richtung erfolgt, die auf eine Ebene parallel zu einer der Seitenflächen (213, 214) der Schichtenanordnung gerichtet ist.

16. Solarmodul nach einem der Ansprüche 13 bis 15,
bei dem das geformte Verbinderelement (9, 92, 93) derart ausgebildet ist, dass eine Kontaktierung desselben durch die elektrische Leitung (14, 15) aus einer Richtung erfolgt, die auf eine Ebene parallel zu einer der Hauptflächen (222) der Schichtenanordnung gerichtet ist.

17. Solarmodul nach einem der Ansprüche 8 bis 16,
bei dem das geformte Verbinderelement (7, 8, 9) eine Bypass-Diode (6) enthält.

18. Solarmodul nach einem der vorhergehenden Ansprüche,
bei dem wenigstens eines der Verbinderelemente (4-1, 4-2, 7, 8, 9) derart ausgebildet ist, dass dieses einen Teil eines Rahmens (28) des Solarmoduls (1) bildet.

19. Solarmodul nach einem der vorhergehenden Ansprüche,
bei dem sich wenigstens eines der Verbinderelemente (4-1, 4-2, 7, 8, 9) in Längsrichtung über eine Distanz erstreckt, die in Relation zu der Länge der Schichtenanordnung (2) gering ist.

## Revendications

1. Module solaire pour générer de l'énergie électrique
- possédant un arrangement de couches (2) comprenant une première couche plane (21), une deuxième couche plane (22) qui est disposée à une certaine distance de la première couche (21), et au moins une pile photovoltaïque (25) pour générer de l'énergie électrique suite au rayonnement dirigé sur elle, ladite pile étant disposée entre la première et la deuxième couche (21, 22) ;
- possédant un système de connexion électrique (3) pour l'interconnexion électrique de la pile photovoltaïque (25) ;
- le système de connexion électrique (3) comprenant au moins un élément (4-1) faisant office de connecteur pour la connexion électrique externe du module solaire (1), ledit élément étant connecté à l'arrangement de couches (2) dans une zone périphérique (26) de ce dernier par l'intermédiaire d'au moins un élément (5) faisant office de contact qui fait saillie dans l'arrangement de couches ;
- **caractérisé en ce que** l'élément (4-1) faisant office de connecteur comprend au moins un moyen de connexion mécanique (41-1) pour la connexion de l'élément (4-1) faisant office de connecteur à un moyen de connexion mécanique correspondant (41-2) d'un élément supplémentaire (4-2) faisant office de connecteur, qui est réalisé de manière séparée et qui est connecté à l'arrangement de couches (2) dans la zone périphérique (26) par l'intermédiaire d'au moins un élément (5) faisant office de contact qui fait saillie dans l'arrangement de couches, le moyen de connexion mécanique comprenant un dispositif de verrouillage (41-1) pour la connexion à un dispositif de verrouillage correspondant (41-2) de élément supplémentaire (4-2) faisant office de connecteur.

2. Module solaire selon la revendication 1, dans lequel le moyen de connexion mécanique (41-1) est conçu et réalisé d'une manière telle que l'élément supplémentaire (4-2) faisant office de connecteur est connecté à une extrémité à l'élément (4-1) faisant office de connecteur.

3. Module solaire selon l'une quelconque des revendications 1 à 2, dans lequel une zone de connexion électrique (42-1) de l'élément (4-1) faisant office de connecteur est réalisée d'une manière telle qu'un conducteur électrique (11) pour la connexion électrique externe du module solaire (1) est prévu dans cette zone de connexion (42-1) ou peut y être connecté.

4. Module solaire selon la revendication 3, dans lequel la zone de connexion électrique (42-1) de l'élément (4-1) faisant office de connecteur est disposée à une extrémité éloignée du moyen de connexion mécanique (41-1).

5. Module solaire selon l'une quelconque des revendications 1 à 4, dans lequel l'élément (4-1) faisant office de connecteur contient au moins une diode de déviation (6).

6. Module solaire selon l'une quelconque des revendications 1 à 5, dans lequel
- on prévoit plusieurs éléments (5) faisant office de contact, qui font saillie dans l'arrangement de couches (2), qui sont guidés à l'extérieur de l'arrangement de couches (2) ;
- dans chaque cas, une diode (6), contenue dans l'élément (4-1) faisant office de connecteur, est connectée entre les éléments sortis (5) faisant office de contact.

7. Module solaire selon la revendication 6, dans lequel un conducteur électrique (13) est prévu sur un élément externe (5-1) faisant office de contact, qui est mis en contact avec l'élément (4-1) faisant office de connecteur, dans le but de connecter l'élément externe (5-1) faisant office de contact avec un élément externe correspondant (5-2) faisant office de contact de l'élément supplémentaire (4-2) faisant office de connecteur.

8. Module solaire pour générer de l'énergie électrique selon l'une quelconque des revendications précédentes, dans lequel
- le système de connexion électrique (3) comprend en outre au moins un élément (7, 8, 9) faisant office de connecteur, réalisé en trois dimensions, formé à l'extérieur de l'arrangement de couches (2) pour une connexion électrique externe du module solaire (1), ledit élément formé faisant office de connecteur étant connecté à l'arrangement de couches (2) dans une zone périphérique (26) de cette dernière par l'intermédiaire d'au moins un élément (5) faisant office de contact qui fait saillie dans l'arrangement de couches (2) ;
- dans lequel au moins une première partie (7-1, 8-1, 9-1) de l'élément formé faisant office de connecteur s'étend le long d'un bord (201) de l'arrangement de couches et une deuxième partie (7-2, 8-2, 9-2) de l'élément formé faisant office de connecteur s'étend dans une direction (204, 222) orthogonale par rapport au bord (201).

9. Module solaire selon la revendication 8, dans lequel :
- la première partie (7-1) de l'élément formé (7) faisant office de connecteur entre en contact avec l'arrangement de couches (2) par l'intermédiaire d'une face latérale (211) de ce dernier et la deuxième partie (7-2) de l'élément formé faisant office de connecteur fait saillie dans une grande face (222) de l'arrangement de couches ;
- la deuxième partie (7-2) est réalisée d'une manière telle qu'un conducteur électrique (11) pour la connexion électrique externe du module solaire (1) est prévu sur la deuxième partie (7-2) ou peut y être connecté.

10. Module solaire selon la revendication 9, dans lequel la deuxième partie (7-2) de l'élément formé (7) faisant office de connecteur est réalisée d'une manière telle que la mise en contact de la deuxième partie (7-2) est réalisée par le conducteur électrique (11) à partir d'un bord opposé (203) de l'arrangement de couches (2).

11. Module solaire selon la revendication 9, dans lequel la deuxième partie (7-2) de l'élément formé (7) faisant office de connecteur est réalisée d'une manière telle que la mise en contact de la deuxième partie (7-2) est réalisée par le conducteur électrique (11) à partir d'une direction s'étendant le long du bord (201) de l'arrangement de couches (2), auquel la première partie (7-1) est fixée.

12. Module solaire selon la revendication 9, dans lequel la première partie (8-1, 9-1) et la deuxième partie (8-2, 9-2) de l'élément formé (8, 9) faisant office de connecteur sont connectées l'une à l'autre en formant approximativement des angles droits ;
- l'élément formé (8, 9) faisant office de connecteur est disposé dans une zone de coin (27) de l'arrangement de couches (2), la première et la deuxième partie (8-1, 9-1, 8-2, 9-2) de l'élément faisant office de connecteur étant connectées à l'arrangement de couches à différents bords (201, 204) de celui-ci.

13. Module solaire selon la revendication 12, dans lequel au moins une des parties (8-1, 9-1, 8-2, 9-2) de l'élément formé (8, 9) faisant office de connecteur est réalisée d'une manière telle qu'un conducteur électrique (11, 14, 15) pour la connexion électrique externe du module solaire (1) est prévu sur la partie (8-1, 9-1, 8-2, 9-2) ou peut y être connecté.

14. Module solaire selon la revendication 13, dans lequel au moins une des parties (8-1, 8-2) de l'élément formé faisant office de connecteur est réalisée d'une manière telle que la mise en contact de la partie (8-1, 8-2) est réalisée par l'intermédiaire du conducteur électrique (11) à partir d'une direction s'étendant le long du bord (201, 204) de l'arrangement de couches auquel la partie (8-1, 8-2) est fixée.

15. Module solaire selon la revendication 13 ou selon la revendication 14, dans lequel au moins une des parties (8-2, 9-2) de l'élément formé faisant office de connecteur est réalisée d'une manière telle que la mise en contact de la partie (8-2, 9-2) est réalisée par l'intermédiaire du conducteur électrique (11, 14, 15) à partir d'une direction orientée vers un plan parallèle à une des faces latérales (213, 214) de l'arrangement de couches.

16. Module solaire selon l'une quelconque des revendications 13 à 15, dans lequel l'élément formé (9, 92, 93) faisant office de connecteur est réalisé d'une manière telle que sa mise en contact a lieu par l'intermédiaire du conducteur électrique (14, 15) à partir d'une direction orientée vers un plan parallèle à une des grandes faces (222) de l'arrangement de couches.

17. Module solaire selon l'une quelconque des revendications 8 à 16, dans lequel l'élément formé (7, 8, 9) faisant office de connecteur contient une diode de déviation (6).

18. Module solaire selon l'une quelconque des revendications précédentes, dans lequel au moins un des éléments (4-1, 4-2, 7, 8, 9) faisant office de connecteur est réalisé d'une manière telle qu'il fait partie d'un bâti (28) du module solaire (1).

19. Module solaire selon l'une quelconque des revendications précédentes, dans lequel au moins un des éléments (4-1, 4-2, 7, 8, 9) faisant office de connecteur s'étend en direction longitudinale sur une distance qui est petite par rapport à la longueur de l'arrangement de couches (2).
